# FASCICULE DE BREVET EUROPEEN

(11) **EP 3 444 698 B1**
(45) Date de publication et mention de la délivrance du brevet: **12.07.2023**
(21) Numéro de dépôt: 18189311.6
(22) Date de dépôt: 16.08.2018
(51) Int. Cl.: G05F 1/46, G01T 1/185

(54) **PROCÉDÉ ET DISPOSITIF DE RÉTROACTION SUR LA HAUTE TENSION D'UN DÉTECTEUR GAZEUX**
RÜCKKOPPLUNGSVERFAHREN UND -VORRICHTUNG FÜR DIE HOCHSPANNUNG EINES GASDETEKTORS
METHOD AND DEVICE PROVIDING HIGH-VOLTAGE FEEDBACK OF A GAS DETECTOR

(30) Priorité: 18.08.2017 FR 1757755
(43) Date de publication de la demande: 20.02.2019
(73) Titulaire: Commissariat à l'énergie atomique et aux énergies alternatives, 75015 Paris (FR)
(72) Inventeur: BOUTEILLE, Simon, 87000 Limoges (FR); PROCUREUR, Sébastien, 91120 Palaiseau (FR)
(74) Mandataire: Brevalex

(56) Documents cités:
- EP-A1- 2 990 831
- EP-A2- 0 483 007
- WO-A1-2011/138631
- JP-A- S58 187 885
- US-A1- 2015 198 723

## Description

### DOMAINE TECHNIQUE

Le domaine de l'invention est celui des détecteurs de particules à ionisation de gaz. De tels détecteurs utilisent un gaz comme milieu d'interaction et des hautes tensions pour amplifier les charges électriques créées par les particules incidentes qui traversent le détecteur. L'invention concerne plus particulièrement un système de rétroaction de ces hautes tensions pour stabiliser l'amplitude des signaux délivrés par un tel détecteur gazeux.

### ÉTAT DE LA TECHNIQUE ANTÉRIEURE

En traversant l'enceinte d'un détecteur gazeux, une particule ionise les atomes du gaz en leur arrachant des électrons. En présence d'un champ électrique dans le détecteur appliqué entre au moins deux électrodes placées dans l'enceinte, par exemple une anode et une cathode, les électrons dérivent vers l'anode tandis que les ions dérivent vers la cathode.

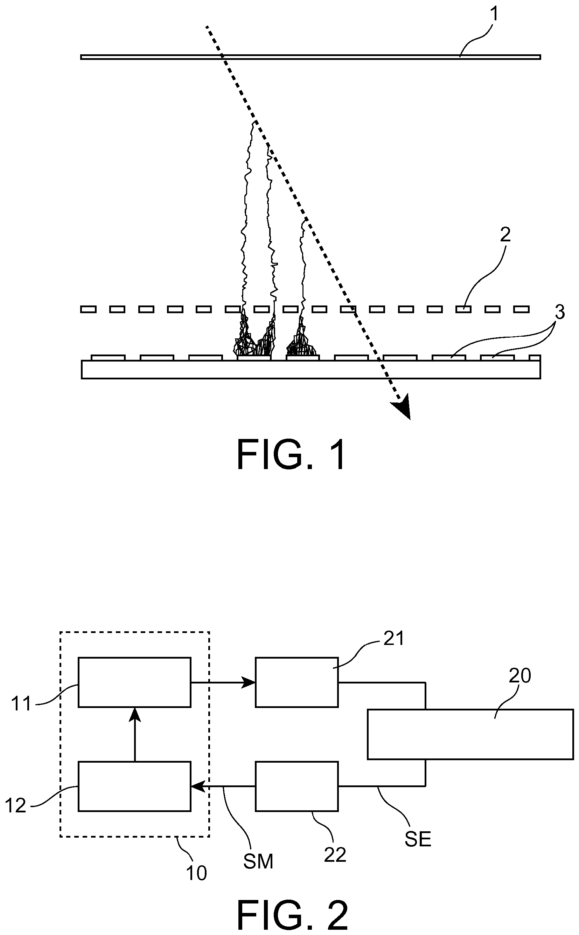

On a représenté sur la figure 1 un schéma d'un détecteur gazeux de type MICROMEGAS (pour MICRO MEesh GAseous Structure). Lorsqu'une particule chargée incidente (flèche en pointillés) traverse le volume gazeux du détecteur, elle ionise le gaz le long de sa trajectoire. En appliquant un champ électrique entre une électrode de dérive 1 et une micro-grille 2 (avec en général une haute tension V1 sur l'électrode de dérive), les électrons ainsi créés dérivent jusqu'à cette micro-grille 2. En appliquant un deuxième champ électrique entre cette micro-grille et des pistes de lecture 3 (et donc une deuxième haute tension V2 soit sur la micro-grille, soit sur les pistes, l'autre électrode étant généralement mise au potentiel de la masse), les électrons traversent la micro-grille et se multiplient (phénomène d'avalanche) induisant ainsi un signal significatif sur les pistes reliées à une électronique de lecture. La taille moyenne de l'avalanche (c'est-à-dire le facteur multiplicatif des électrons, appelé gain du détecteur) dépend fortement des conditions du gaz, notamment sa composition (incluant son taux d'humidité), sa température et sa pression. Elle dépend aussi du champ dans l'espace d'amplification, c'est-à-dire de la haute tension V2 appliquée.

La taille moyenne de l'avalanche, et donc l'amplitude du signal qui en résulte, dépend donc de nombreux paramètres, à la fois environnementaux (température, pression) et liés à la composition du gaz (présence d'additifs, de polluants, d'humidité, etc.). Or des variations de ces paramètres sont fréquentes, et modifient l'amplitude moyenne des signaux.

Dans la grande majorité des cas, ces variations ne sont pas corrigées, en particulier pour des utilisations en intérieur où les variations relatives de température et de pression sont limitées. Cependant pour certaines applications naissantes, comme l'imagerie par muons (muographie), les détecteurs sont souvent utilisés à l'extérieur, au plus proche des structures à imager. Dans un tel cas de figure, les variations environnementales peuvent être très élevées, et peuvent ainsi profondément modifier les performances du détecteur (stabilité, efficacité, résolutions spatiale ou temporelle, etc.).

Des solutions ont été développées qui exploitent des capteurs placés dans le volume gazeux afin de mesurer tout ou partie des paramètres environnementaux (température du gaz, pression atmosphérique, humidité, etc.), et implémentent une rétroaction sur les hautes tensions en venant calculer, à partir des variations de ces paramètres, une consigne à fournir au système d'alimentation haute tension du détecteur. Un exemple d'une correction des variations de paramètres environnementaux est par exemple décrite dans l'article « Measurements of 55Fe activity in activated steel samples with GEMPix », A. Curioni et al., NIM A 849 (2017), 60 (section 7).

Un tel ajustement de la haute tension permet de stabiliser l'amplitude des détecteurs, mais seulement partiellement. En effet, la relation entre le gain du détecteur et les paramètres environnementaux est complexe, et dépend en plus de la composition du gaz. Le même problème apparait d'ailleurs lorsque le débit de gaz est très faible, voire nul lorsque les détecteurs sont utilisés en circuit fermé, car la composition du gaz peut changer, et ainsi l'amplitude.

D'autres exemples de dispositifs de rétroaction sont décrits dans EP 0 483 007 A2, WO 2011/138631 A1, JP S58 187885 A, US 2015/198723 A1 et EP 2990 831 A1.

Ainsi, les résultats de ces systèmes de rétroaction sont peu satisfaisants, et des variations d'amplitude sont toujours observées. Dans ce cadre, un objectif de l'invention est de proposer un système de rétroaction plus performant.

### EXPOSÉ DE L'INVENTION

L'invention propose notamment un dispositif de rétroaction tel que revendiqué dans la revendication 1

L'invention propose également un procédé de commande d'un détecteur de particules à ionisation de gaz et un produit programme d'ordinateur tels que revendiqués dans les revendications 8 et 9, respectivement.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1, déjà discutée précédemment, est un schéma d'un détecteur de type MICROMEGAS;
- la figure 2 est un schéma d'un détecteur à ionisation de gaz doté d'un dispositif de rétroaction selon l'invention.

### EXPOSÉ DÉTAILLÉ DE MODES DE RÉALISATION PARTICULIERS

L'invention porte sur un procédé et un dispositif de rétroaction pour un détecteur de particules à ionisation de gaz. L'invention n'est pas limitée à un détecteur de type MICROMEGAS tel qu'illustré en figure 1 mais s'étend à n'importe quel type de détecteur gazeux, comme par exemple un détecteur GEM (pour Gas Electron Multiplier), une chambre à dérive ou une chambre à projection temporelle (TPC pour Time Projection Chamber).

En référence à la figure 2 le détecteur de particules à ionisation de gaz comprend une enceinte à gaz 20 (i.e. une enceinte de détection contenant du gaz ) dans laquelle sont placées des électrodes et un générateur de haute tension 21 apte à créer une différence de potentiel entre les électrodes. Par électrodes placées dans l'enceinte, on entend aussi bien des électrodes indépendantes de l'enceinte que des électrodes formées au moins en partie par l'enceinte, notamment par ses parois.

Le détecteur comporte en outre une électronique de lecture 22 apte à collecter un signal électrique SE (charge ou courant) induit par une particule dans l'enceinte pour fournir un signal de mesure SM.

L'électronique de lecture 22 peut échantillonner le signal électrique SE et ainsi fournir pour signal de mesure SM un signal représentatif de la forme du signal électrique induit par une particule. Alternativement, l'électronique de lecture peut intégrer directement le signal électrique induit SE et fournir pour signal de mesure SM un signal directement représentatif de l'amplitude du signal électrique induit par chaque particule dans l'enceinte, le cas échéant avec une grandeur associée (comme par exemple le temps au-dessus d'un seuil).

Le dispositif de rétroaction 10 comprend un régulateur de tension 11 configuré pour calculer un indicateur caractéristique du signal de mesure SM délivré par l'unité électronique de lecture 22 et pour modifier une consigne de tension délivrée au générateur de haute tension 21 en fonction de l'indicateur caractéristique du signal de mesure.

A partir du signal de mesure SM, le régulateur de tension 11 peut déterminer (le cas échéant) et stocker au moins une grandeur représentative de l'amplitude du signal électrique induit par chaque particule. Le régulateur de tension 11 accumule ainsi plusieurs grandeurs représentatives des amplitudes correspondant à une succession de particules incidentes traversant l'enceinte 20 du détecteur gazeux. Cette accumulation est réalisée sur un temps suffisant long (par exemple quelques minutes) pour avoir une bonne estimation de l'indicateur caractéristique, et suffisamment court devant les variations à corriger. En pratique, cette accumulation peut être réalisée pour un nombre donné de collectes d'un signal électrique induit par une particule. A titre d'exemple, l'accumulation de signaux induits par quelques centaines de particules peut être suffisante pour avoir une précision adéquate. Alternativement, l'accumulation de signaux induits par des particules est réalisée sur une fenêtre temporelle.

La rétroaction selon l'invention utilise un indicateur caractéristique des signaux induits par les particules dans le détecteur, par exemple une grandeur représentative des amplitudes de ces signaux. Cette rétroaction est donc directe, en ce qu'elle se fait sur la variable que l'on veut ajuster, et non sur des paramètres intermédiaires qui influent sur cette variable. Cette rétroaction permet ainsi de corriger tout ou partie des variations des paramètres influant sur le gain du détecteur. C'est bien sûr le cas des paramètres environnementaux mais aussi de paramètres liés à la composition du mélange gazeux qui peut être modifié dans le temps (fuite de gaz, dégazage d'un composant, etc.), ou encore de différents facteurs modifiant le gain (par exemple l'apparition d'un courant de fuite) ou un défaut du système d'alimentation haute tension (par exemple quand la valeur de la haute tension de réglage ne correspond pas à la valeur réellement appliquée).

L'indicateur caractéristique du signal de mesure peut être une amplitude caractéristique du signal de mesure, par exemple une amplitude moyenne ou médiane, calculée pour un nombre donné de collectes d'un signal électrique induit par une particule (i.e. sur la base d'un nombre donné d'événements détectés) ou sur une fenêtre temporelle prédéfinie.

L'indicateur caractéristique du signal de mesure peut être un temps caractéristique au-dessus d'un seuil, par exemple un temps moyen ou médian, calculé pour un nombre donné de collectes d'un signal électrique induit par une particule ou sur une fenêtre temporelle prédéfinie.

L'indicateur caractéristique du signal de mesure peut être une intégrale du signal de mesure, par exemple une intégrale moyenne ou médiane, calculée pour un nombre donné de collectes d'un signal électrique induit par une particule ou sur une fenêtre temporelle prédéfinie.

L'indicateur caractéristique du signal de mesure peut être un courant induit dans l'enceinte de détection, par exemple un courant moyen intégré sur une fenêtre temporelle prédéfinie.

L'indicateur caractéristique du signal de mesure peut être un nombre, ou une fraction, d'éléments de lecture portant un signal, par exemple un nombre ou une fraction moyenne ou médiane, calculé pour un nombre donné de collectes d'un signal électrique induit par une particule ou sur une fenêtre temporelle prédéfinie.

Le régulateur de tension 11 peut notamment être configuré pour modifier la consigne de tension de manière à minimiser l'écart entre l'indicateur caractéristique du signal de mesure et une valeur prédéterminée. Cette valeur prédéterminée peut être choisie de manière à ce que l'efficacité de détection du détecteur soit la meilleure possible (proche de 100% pour une particule chargée) en évitant une trop grande saturation des signaux. Par exemple, dans le cas d'une électronique de lecture qui numérise les signaux électriques induits par des particules, on choisit une valeur prédéterminée en dessous d'une valeur conduisant à la saturation de convertisseurs analogiques-numériques qui équipent l'électronique de lecture.

Typiquement, si la valeur de l'indicateur caractéristique calculé est inférieure à la valeur prédéterminée, la haute tension est augmentée (en valeur absolue), et vice-versa. La correction la plus simple consiste à modifier la haute tension d'une quantité proportionnelle à la différence entre la valeur calculée et la valeur prédéterminée. D'autres fonctions, non-linéaires, ou utilisant des valeurs précédentes des hautes tensions, peuvent aussi être appliquées afin de mieux stabiliser l'amplitude et de minimiser des phénomènes d'oscillations classiques en rétroaction.

Dans un mode de réalisation, le dispositif de rétroaction peut être configuré pour sélectionner uniquement les événements qui correspondent réellement au passage d'une particule en éliminant ainsi une partie du bruit potentiel. A cet effet, le dispositif de rétroaction comprend une unité 12 de discrimination du bruit apte à vérifier que les signaux délivrés par l'unité électronique de lecture correspondent réellement à une particule et ne sont donc pas du bruit ce qui permet d'éliminer, au moins partiellement, des signaux de bruit dans le calcul de l'indicateur caractéristique. Des bruits parasites (électroniques, statistiques, etc.) peuvent effectivement passer un seuil de détection et être considérés à tort comme un signal physique par le dispositif de rétroaction. Leur prise en compte dans le calcul de l'indicateur caractéristique peut donc fausser la rétroaction. L'identification de signaux provenant réellement d'une particule permet donc d'obtenir une rétroaction plus robuste et plus précise. Le régulateur de tension 11 est ainsi configuré pour calculer l'indicateur caractéristique du signal de mesure sur la base d'échantillons du signal de mesure correspondant à une collecte par l'unité électronique de lecture 22 d'un signal électrique déterminé comme n'étant pas du bruit par l'unité 12.

Selon une variante qui ne relève pas de l'invention et qui est donnée à titre illustratif, l'unité 12 de discrimination du bruit peut être configurée pour déterminer qu'un signal électrique collecté par l'unité électronique de lecture 22 n'est pas du bruit et ainsi permettre de sélectionner un événement lorsque ledit événement est détecté au moins un nombre minimal de fois par les différentes pistes de lecture voire par différentes enceintes de détection susceptibles de détecter la même particule.

Selon l'invention, l'unité 12 de discrimination du bruit est configurée pour vérifier que les positions des signaux enregistrés sont sur une trajectoire possible, par exemple une ligne droite. A cet effet, l'unité 12 met en oeuvre un algorithme de reconstruction de trajectoire de type régression linéaire, reconnaissance de forme ou filtre de Kalman par exemple. Le régulateur de tension 11 vient alors calculer l'indicateur caractéristique du signal de mesure sur la base d'échantillons du signal de mesure correspondant à une collecte par l'unité électronique de lecture 22 d'un signal électrique induit le long de la trajectoire d'une particule reconstruite par l'unité 12 de discrimination du bruit. Le dispositif de rétroaction peut être couplé à une pluralité d'enceintes de détection qui sont susceptibles de détecter la même particule. Chaque enceinte de détection peut en effet permettre de mesurer la position de la particule, et on peut donc vérifier avec plusieurs enceintes que les positions des signaux enregistrés sont sur une trajectoire possible.

Le dispositif de rétroaction peut être implémenté de manière matérielle (hardware) et/ou logicielle (software). Il peut être embarqué sur une carte électronique, laquelle peut également loger l'électronique de lecture.

L'invention porte également sur un détecteur gazeux, par exemple un imageur à muons, qui inclut le dispositif de rétroaction 10 précédemment décrit. Elle s'étend également à un procédé de commande d'un détecteur de particules à ionisation de gaz tel que revendiqué dans la revendication 8.

Et l'invention porte également sur un produit programme d'ordinateur comprenant des instructions de code pour la mise en oeuvre de ce procédé de commande, lorsque ledit programme est exécuté sur un ordinateur.

## Revendications

1. Dispositif de rétroaction (10) pour un détecteur de particules à ionisation de gaz,
le détecteur comprenant une enceinte de détection (20) contenant du gaz, une unité électronique de lecture (22) configurée pour collecter un signal électrique (SE) induit par une particule traversant l'enceinte de détection (20) pour délivrer un signal de mesure (SM), et un générateur de haute tension (21) configuré pour créer une différence de potentiel entre des électrodes placées dans l'enceinte de détection (20), ledit dispositif de rétroaction (10) comprenant un régulateur de tension (11) configuré pour :
- calculer un indicateur caractéristique du signal de mesure (SM) délivré par l'unité électronique de lecture (22) ; et
- modifier une consigne de tension délivrée au générateur de haute tension (21) en fonction de l'indicateur caractéristique calculé ;
ledit dispositif de rétroaction (10) étant **caractérisé en ce qu'**il comporte en outre une unité (12) de discrimination du bruit configurée pour mettre en oeuvre un algorithme de reconstruction de trajectoire pour reconstruire une trajectoire de la particule traversant l'enceinte de détection (20) et
vérifier si le signal électrique (SE) collecté a été induit le long de la trajectoire reconstruite, déterminant ainsi que le signal de mesure (SM) délivré par l'unité électronique de lecture (22) n'est pas du bruit de sorte à éliminer, au moins partiellement, le bruit dans le calcul de l'indicateur caractéristique; et
**en ce que** le régulateur de tension (11) est configuré pour calculer l'indicateur caractéristique du signal de mesure (SM) sur la base d'échantillons du signal de mesure (SM) correspondant à une collecte, par l'unité électronique de lecture (22), du signal électrique (SE) vérifié comme ayant été induit le long de la trajectoire de la particule reconstruite par l'unité (12) de discrimination du bruit.

2. Dispositif de rétroaction (10) selon la revendication 1, dans lequel le régulateur de tension (11) est
configuré pour modifier la consigne de tension afin de minimiser un écart entre l'indicateur caractéristique calculé et une valeur prédéterminée.

3. Dispositif de rétroaction (10) selon l'une des revendications 1 et 2, dans lequel l'indicateur
caractéristique est calculé pour un nombre donné de collectes du signal électrique (SE) induit par la particule traversant l'enceinte de détection (20).

4. Dispositif de rétroaction (10) selon l'une des revendications 1 à 3, dans lequel l'indicateur
caractéristique du signal de mesure (SM) est une amplitude caractéristique du signal de mesure (SM).

5. Dispositif de rétroaction selon
la revendication 4, dans lequel l'amplitude caractéristique est une amplitude moyenne.

6. Dispositif de rétroaction (10) selon l'une quelconque des revendications 1 à 5, dans lequel
l'algorithme de reconstruction de trajectoire est un algorithme de type régression linéaire, reconnaissance de forme ou filtre de Kalman.

7. Détecteur de particules à ionisation de gaz, comprenant une enceinte de détection (20) contenant du gaz, un générateur de haute tension (21) configuré pour créer une différence de potentiel entre des électrodes placées dans l'enceinte de détection (20), une unité électronique de lecture (22) configurée pour collecter des signaux électriques (SE) induits par les particules dans l'enceinte de détection (20) pour délivrer un signal de mesure (SM) et un dispositif de rétroaction (10) selon l'une des revendications 1 à 6.

8. Procédé de commande d'un détecteur de particules à ionisation de gaz qui comprend une enceinte de détection (20) contenant du gaz, une unité électronique de lecture (22), configuré pour collecter un signal électrique (SE) induit par une particule traversant l'enceinte de détection (20) pour délivrer un signal de mesure (SM), et un générateur de haute tension (21) configuré pour créer une différence de potentiel entre des électrodes placées dans l'enceinte de détection (20), le procédé comprenant les étapes consistant à :
calculer un indicateur caractéristique d'un signal de mesure (SM) délivré par l'unité électronique de lecture (22) ; et
modifier une consigne de tension délivrée au générateur de haute tension (21) en fonction de l'indicateur caractéristique calculé ;
le procédé étant **caractérisé en ce qu'**il comprend en outre une étape consistant mettre en oeuvre un algorithme de reconstruction de trajectoire pour reconstruire une trajectoire de la particule traversant l'enceinte de détection (20) et vérifier si le signal électrique (SE) collecté a été induit le long de la trajectoire reconstruite, déterminant ainsi que le signal de mesure (SM) délivré par l'unité électronique de lecture (22) n'est pas du bruit de sorte à éliminer, au moins partiellement, le bruit dans le calcul de l'indicateur caractéristique; et
**en ce que** le calcul de l'indicateur caractéristique est basé sur des échantillons du signal de mesure (SM) correspondant à une collecte, par l'unité électronique de lecture (22), du signal électrique (SE) vérifié comme ayant été induit le long de la trajectoire de la particule reconstruite par l'unité (12) de discrimination du bruit.

9. Produit programme d'ordinateur comprenant des instructions de code pour la mise en oeuvre du procédé selon la revendication 8, lorsque ledit programme est exécuté sur un ordinateur.

## Patentansprüche

1. Rückkopplungsvorrichtung (10) für einen Gasionisationspartikeldetektor, wobei der Detektor einen Detektionsbehälter (20) umfasst, der Gas enthält, eine elektronische Ableseeinheit (22), die konfiguriert ist, um ein elektrisches Signal (SE) zu erfassen, das von einem Partikel induziert wird, das den Detektionsbehälter (20) durchquert, um ein Messsignal (SM) zu liefern, und einen Hochspannungsgenerator (21), der konfiguriert ist, um eine Potentialdifferenz zu erzeugen zwischen den Elektroden, die im Detektionsbehälter (20) angeordnet sind, wobei die Rückkopplungsvorrichtung (10) einen Spannungsregler (11) umfasst, der konfiguriert ist zum:
- Berechnen eines Indikators, der charakteristisch ist, für das Messsignal (SM), das von der elektronischen Ableseeinheit (22) geliefert wurde; und
- Ändern eines Spannungssollwerts, der an den Hochspannungsgenerator (21) in Abhängigkeit des berechneten charakteristischen Indikators geliefert wurde;
wobei die Rückkopplungsvorrichtung (10) **dadurch gekennzeichnet ist, dass** sie ferner eine Geräuschunterscheidungseinheit (12) beinhaltet, die konfiguriert ist, um einen Algorithmus der Rekonstruktion der Trajektorie anzuwenden, um eine Trajektorie des Partikels, das den Detektionsbehälter (20) durchquert, zu rekonstruieren; und
- Prüfen, ob das erfasste elektrische Signal (SE) entlang der rekonstruierten Trajektorie induziert wurde, wodurch festgestellt wird, dass das Messsignal (SM), das von der elektronischen Ableseeinheit (22) geliefert wurde, kein Geräusch vom Typ ist, das, mindestens teilweise, das Geräusch in der Berechnung des charakteristischen Indikators eliminiert; und
dadurch, dass der Spannungsregler (11) konfiguriert ist, um den charakteristischen Indikator des Messsignals (SM) zu berechnen anhand von Abtastwerten des Messsignals (SM), die einer Erfassung entsprechen, durch die elektronische Ableseeinheit (22), des elektrischen Signals (SE), das als durch die Geräuschunterscheidungseinheit (12) entlang der Trajektorie des rekonstruierten Partikels induziertes verifiziert wurde.

2. Rückkopplungsvorrichtung (10) nach Anspruch 1, wobei der Spannungsregler (11) konfiguriert ist, um den Spannungssollwert zu ändern, um eine Abweichung zwischen dem berechneten charakteristischen Indikator und einem vorbestimmten Wert zu minimieren.

3. Rückkopplungsvorrichtung (10) nach einem der Ansprüche 1 und 2, wobei der charakteristische Indikator für eine gegebene Anzahl von Erfassungen des elektrischen Signals (SE) berechnet wird, das durch das Partikel induziert wird, das den Detektionsbehälter (20) durchquert.

4. Rückkopplungsvorrichtung (10) nach einem der Ansprüche 1 bis 3, wobei der charakteristische Indikator des Messsignals (SM) eine charakteristische Amplitude des Messsignals (SM) ist.

5. Rückkopplungsvorrichtung nach Anspruch 4, wobei die charakteristische Amplitude eine mittlere Amplitude ist.

6. Rückkopplungsvorrichtung (10) nach einem der Ansprüche 1 bis 5, wobei der Algorithmus der Rekonstruktion der Trajektorie ein Algorithmus vom Typ lineare Regression, Formerkennung oder Kalman-Filter ist.

7. Gasionisationspartikeldetektor, einen Detektionsbehälter (20) umfassend, der Gas enthält, einen Hochspannungsgenerator (21), der konfiguriert ist, um eine Potentialdifferenz zu erzeugen zwischen den Elektroden, die im Detektionsbehälter (20) angeordnet sind, eine elektronische Ableseeinheit (22), die konfiguriert ist, um elektrische Signale (SE) zu erfassen, die durch die Partikel im Detektionsbehälter (20) induziert werden, um ein Messsignal (SM) zu liefern, und eine Rückkopplungsvorrichtung (10) nach einem der Ansprüche 1 bis 6.

8. Verfahren zum Steuern eines Gasionisationspartikeldetektors, einen Detektionsbehälter (20) umfassend, der Gas enthält, eine elektronische Ableseeinheit (22), die konfiguriert ist, um ein elektrisches Signal (SE) zu erfassen, das von einem Partikel induziert wurde, das den Detektionsbehälter (20) durchquert, um ein Messsignal (SM) zu liefern, und einen Hochspannungsgenerator (21), der konfiguriert ist, um eine Potentialdifferenz zu erzeugen zwischen den Elektroden, die im Detektionsbehälter (20) angeordnet sind, wobei das Verfahren die Schritte umfasst, die bestehen aus:
Berechnen eines Indikators, derfürein Messsignal (SM) charakteristisch ist, das von der elektronischen Ableseeinheit (22) geliefert wurde; und
Ändern eines Spannungssollwerts, der an den Hochspannungsgenerator (21) in Abhängigkeit des berechneten charakteristischen Indikators geliefert wurde;
wobei das Verfahren **dadurch gekennzeichnet ist, dass** es ferner einen Schritt umfasst, der darin besteht, einen Algorithmus der Rekonstruktion der Trajektorie anzuwenden, um eine Trajektorie des Partikels, das den Detektionsbehälter (20) durchquert, zu rekonstruieren, und zu prüfen, ob das erfasste elektrische Signal (SE) entlang der rekonstruierten Trajektorie induziert wurde, wodurch festgestellt wird, dass das Messsignal (SM), das von der elektronischen Ableseeinheit (22) gelieferte wurde, kein Geräusch vom Typ ist, das, mindestens teilweise, das Geräusch in der Berechnung des charakteristischen Indikators eliminiert; und
dadurch, dass die Berechnung des charakteristischen Indikators auf Abtastwerten des Messsignals (SM) basiert, die einer Erfassung entsprechen, durch die elektronische Ableseeinheit (22), des elektrischen Signals (SE), das als durch die Geräuschunterscheidungseinheit (12) entlang der Trajektorie des rekonstruierten Partikels induziertes verifiziert wurde.

9. Computerprogrammprodukt, Codeanweisungen zur Anwendung des Verfahrens nach Anspruch 8 umfassend, wenn das Programm auf einem Computer ausgeführt wird.

## Claims

1. A feedback device (10) for a gas ionisation particle detector, the detector comprising a detection chamber (20) containing gas, an electronic read unit (22) configured to collect an electrical signal (SE) induced by a particle passing through the detection chamber (20) to output a measurement signal (SM), and a high-voltage generator (21) configured to create a potential difference between electrodes placed in the detection chamber (20), said feedback device (10) comprising a voltage regulator (11) configured to:
- calculate a characteristic indicator of the measurement signal (SM) output by the electronic read unit (22); and
- modify a voltage setpoint output to the high-voltage generator (21) as a function of the calculated characteristic indicator;
said feedback device (10) being **characterised in that** it further includes a noise discrimination unit (12) configured to implement a trajectory reconstruction algorithm to reconstruct a trajectory of the particle passing through the detection chamber (20) and verify whether the collected electrical signal (SE) has been induced along the reconstructed trajectory, thereby determining that the measurement signal (SM) output by the electronic read unit (22) is not noise so as to eliminate the noise, at least partially, from the calculation of the characteristic indicator; and
**in that** the voltage regulator (11) is configured to calculate the characteristic indicator of the measurement signal (SM) based on samples of the measurement signal (SM) corresponding to a collection, by the electronic read unit (22), of the electrical signal (SE) determined as having been induced along the trajectory of the particle reconstructed by the noise discrimination unit (12).

2. The feedback device (10) according to claim 1, wherein the voltage regulator (11) is configured to modify the voltage setpoint in order to minimise a discrepancy between the calculated characteristic indicator and a predetermined value.

3. The feedback device (10) according to one of claims 1 and 2, wherein the characteristic indicator is calculated for a given number of collections of the electrical signal (SE) induced by the particle passing through the detection chamber (20).

4. The feedback device (10) according to one of claims 1 to 3, wherein the characteristic indicator of the measurement signal (SM) is a characteristic amplitude of the measurement signal (SM).

5. The feedback device according to claim 4, wherein the characteristic amplitude is an average amplitude.

6. The feedback device (10) according to any one of claims 1 to 5, wherein the trajectory reconstruction algorithm is a linear regression, pattern recognition or Kalman filter type algorithm.

7. A gas ionisation particle detector, comprising a detection chamber (20) containing gas, a high-voltage generator (21) configured to create a potential difference between electrodes placed in the detection chamber (20), an electronic read unit (22) configured to collect electrical signals (SE) induced by the particles in the detection chamber (20) to output a measurement signal (SM) and a feedback device (10) according to one of claims 1 to 6.

8. A method for controlling a gas ionisation particle detector which comprises a detection chamber (20) containing gas, an electronic read unit (22), configured to collect an electrical signal (SE) induced by a particle passing through the detection chamber (20) to output a measurement signal (SM), and a high-voltage generator (21) configured to create a potential difference between electrodes placed in the detection chamber (20), the method comprising the steps of:
calculating a characteristic indicator of a measurement signal (SM) output by an electronic read unit (22); and
modifying a voltage setpoint output to the high-voltage generator (21) according to the calculated characteristic indicator;
the method being **characterised in that** it further comprises a step of implementing a trajectory reconstruction algorithm to reconstruct a trajectory of the particle passing through the detection chamber (20) and verifying whether the collected electrical signal (SE) has been induced along the reconstructed trajectory, thereby determining that a measurement signal (SM) output by the electronic read unit (22) is not noise so as to eliminate the noise, at least partially, from the calculation of the characteristic indicator; and
**in that** the calculation of the characteristic indicator is based on samples of the measurement signal (SM) corresponding to a collection, by the electronic read unit (22), of the electrical signal (SE) determined as having been induced along the reconstructed trajectory of the particle by the noise discrimination unit (12).

9. A computer program product comprising code instructions for the implementation of the method according to claim 8, when said program is executed on a computer.
